**Europäisches Patentamt**

**European Patent Office**

**Office européen des brevets**

(19)

(11) Numéro de publication: **0 275 781 B1**

(12) **FASCICULE DE BREVET EUROPEEN**

(45) Date de publication du fascicule du brevet: **23.01.91**

(51) Int. Cl.⁵: **G 01 V 1/22**

(21) Numéro de dépôt: **87402964.8**

(22) Date de dépôt: **22.12.87**

(54) **Procédé de transmission à un dispositif central d'enregistrement de données sismiques collectées par des appareils d'acquisition répartis sur le terrain et dispositif pour sa mise en oeuvre.**

(30) Priorité: **23.12.86 FR 8618030**

(43) Date de publication de la demande:
**27.07.88 Bulletin 88/30**

(45) Mention de la délivrance du brevet:
**23.01.91 Bulletin 91/04**

(84) Etats contractants désignés:
**BE DE GB IT NL**

(56) Documents cités:
**FR-A-2 077 550**
**FR-A-2 197 182**
**FR-A-2 349 819**
**FR-A-2 496 257**
**GB-A-2 055 467**
**US-A-3 934 202**
**US-A-3 996 554**
**US-A-4 463 354**

(73) Titulaire: **INSTITUT FRANCAIS DU PETROLE**
**4, Avenue de Bois-Préau**
**F-92506 Rueil-Malmaison Cédex (FR)**

(72) Inventeur: **Rialan, Joseph**
**15, rue des Bigots**
**F-92190 Meudon (FR)**

Courier Press, Leamington Spa, England.

**Description**

L'invention a pour objet un procédé de transmission à un système central d'enregistrement, de données sismiques collectées par des dispositifs d'acquisition de données répartis dans une zone à prospecter, et le dispositif pour sa mise en oeuvre.

Les méthodes modernes de prospection sismique comportent l'utilisation de dispositifs de données répartis à intervalles réguliers sur une distance de parfois plusieurs kilomètres. Ils sont adaptés chacun à collecter des signaux sismiques captés par un ou plusieurs récepteurs appropriés (hydrophones ou géophones) en réponse à des ébranlements transmis dans le sol par une source sismique et renvoyés par les discontinuités du sous-sol. Les signaux qu'ils collectent sont échantillonnés, numérisés et stockés dans une mémoire avant leur transmission en temps réel ou différé à un laboratoire central de commande et d'enregistrement.

Les différents dispositifs d'acquisition peuvent être connectés au laboratoire central de commande et d'enregistrement par des câbles communs adaptés à la transmission d'une part de signaux d'ordre ou de test et d'autre part à celle des données sismiques accumulées. Les différents dispositifs d'acquisition sont interrogés en séquence par le laboratoire central et en réponse, lui transmettent les données numériques mémorisées.

Un tel système est décrit par exemple dans le brevet français no 2.471.088.

Les différents dispositifs d'acquisition peuvent être reliés au laboratoire central par voie hertzienne. Chacun d'eux est alors associé à un équipement radio. La transmission au laboratoire central des données collectées peut être effectuée en temps réel et simultanément pour tous les dispositifs d'acquisition. Cela requiert l'emploi et donc la disponibilité d'un grand nombre de canaux de transmission hertzienne à large bande ou à bande étroite de fréquences différentes.

La transmission des données recueillies par les dispositifs d'acquisition peut aussi être effectuée séquentiellement, chacun d'eux transmettant à son tour ses propres données soit directement au laboratoire central soit Par l'intermédiaire d'autres dispositifs d'acquisition intermédiaires ou d'éléments-relais. Des moyens d'enregistrement sont utilisés alors pour mémoriser les données recueillies, le temps nécessaire à leur transfert séquentiel au laboratoire central.

Des systèmes de transmission de données sismiques par voie hertzienne sont décrits par exemple dans les brevets français no 2.511.772 ou 2.538.561.

On connait aussi notamment par le brevet US no 3.946.357 et le brevet européen EP no 10 660, des systèmes de transmission différée où les données sismiques collectées sont stockées sur des enregistreurs à cassette contenus dans les différents appareils d'acquisition. A la fin de chaque séance d'enregistrement sur le terrain ou à intervalles réguliers, l'équipe de terrain procède au remplacement de toutes les cassettes d'enregistrement et rapporte les cassettes enregistrées au laboratoire central où leurs contenus sont transférés sur un appareil d'enregistrement à grande capacité. Lorsqu'une liaison hertzienne est disponible entre chaque dispositif d'acquisition et le laboratoire central, celui-ci peut commander tour à tour la lecture des cassettes de tous les enregistreurs et le transfert des données qu'elles contiennent à l'appareil d'enregistrement central.

Les systèmes de transmission antérieurs cités présentent des inconvénients liés autant au mode de liaison avec le laboratoire central qu'au type d'enregistreur disponible dans chaque dispositif d'acquisition. En effet les opérations de prospection sismique sont souvent conduites dans des zones où la réglementation locale concernant l'emploi de canaux de transmission impose des restrictions gênantes. La transmission des données sismiques, lorsqu'elle est effectuée par voie hertzienne, réclame un ou plusieurs canaux de transmission à large bande qu'il est parfois difficile d'obtenir.

L'utilisation d'enregistreur dans chaque dispositif d'acquistion permet d'éviter le recours permanent sinon total aux transmissions hertziennes en cas de transmission différée et donc facilite la préparation d'une campagne de tirs. Mais de ce fait, on se prive des avantages apportés par un contrôle permanent.

Les enregistreurs à cassette n'étant pas toujours d'une très grande fiabilité, le personnel du laboratoire central ne peut contrôler si leur fonctionnement est correct ou détecter une éventuelle défaillance.

Des tests sont parfois conduits avant le début de chaque séance d'enregistrement sur un profil sismique, depuis le laboratoire central et par voie hertzienne, pour contrôler le bon fonctionnement des enregistreurs. Mais ces tests souvent très longs en raison du nombre d'appareils d'acquisition à interroger, ne peuvent être effectués de façon systématique. Les défaillances éventuelles d'enregistreurs et plus généralement des appareils d'acquisition peuvent donc rester ignorées du personnel de terrain, et cela conduit parfois à une perte importante de données sismiques.

Les enregistreurs à cassette étant relativement lents, le transfert des données sismiques à l'enregistreur central prend souvent un temps considérable. C'est vrai si le transfert a lieu par voie hertzienne depuis chacun des dispositifs d'acquisition. Cela l'est aussi dans le cas ou les cassettes de stockage une fois chargées, sont ramenées au laboratoire central et relues les unes après les autres.

Le procédé et le dispositif selon l'invention permettent d'éviter les inconvénients ci-dessus mentionnés.

Le procédé s'applique au transfert à un dispositif central d'enregistrements des données correspondant à des signaux reçus par un ensemble de capteurs sismiques répartis le long d'un profil sismique à prospecter, en réponse à des ébranlements transmis et renvoyés par des discontinuités du sous-sol, au cours de cycles successifs d'émission-réception, ces signaux étant collectés par une pluralité d'appareils d'acquisition adaptés à échantillonner, numériser et mémoriser des signaux reçus.

Il est caractérisé en ce qu'il comporte la mémorisation, dans chaque appareils d'acquisition sur un moyen de mémorisation statique à accès rapide et à capacité étendue, des données collectées au cours d'une même séance d'exploration sismique constituée d'un nombre déterminé de cycles d'émission-réception, le déplacement, jusqu'au voisinage de chacun des appareils d'acquisition successivement, d'un dispositif de mémorisation de masse dont le debit d'acquisition un de plusieurs M bits/s le transfert sur celui-ci successivement des données mémorisées par chacun des appareils d'acquisition par une voie de transmission unique dont le debit est de plusieurs M bits/s et le report de toutes les données stockées dans le dispositif de mémorisation de masse, au dispositif central d'enregistrement.

Le transfert des données depuis chacun des appareils d'acquisition jusqu'au dispositif de mémorisation de masse peut être effectué par un câble de transmission à grand débit. Il peut aussi être réalisé au moyen d'une liaison hertzienne à courte portée et large bande ou bien encore au moyen d'un faisceau lumineux modulé.

Le procédé selon l'invention peut comporter aussi, à des fins de contrôle, le transfert au dispositif central d'enregistrement, d'une partie des données collectées par chacun des appareils d'acquisition successivement, par une voie de transmission hertzienne à bande passante relativement étroite.

Le procédé selon l'invention peut aussi comporter le transfert de données limitées représentant le résultat de tests de bon fonctionnement de chaque appareil d'acquisition et de la qualité de l'acquisition sismique, dans l'intervalle normal entre les cycles successifs d'émission-réception.

La mémoire à accès rapide est constituée de préférence d'une mémoire à circuits intégrés du type EEPROM ou RAM. Une mémoire de ce type présente de nombreux avantages. Elle est fiable. Son temps d'accès très court facilite la gestion des données mémorisées ainsi que leur transfert. Sa consommation électrique faible convient bien pour des appareils d'acquisition autonomes alimentés par des accumulateurs. D'une grande capacité, elle peut mémoriser toutes les données recueillies au cours d'une même séance d'exploration sismique. Une telle mémoire de ce type est particulièrement adaptée en outre pour faciliter des opérations de test sur les données mémorisées. Les données sismiques partielles devant être transmises directement au dispositif central d'enregistrement à des fins de contrôle ou bien celles qui doivent être traitées pour l'élaboration de données de test à transmettre, peuvent être facilement extraites à volonté de la mémoire vive à n'importe quel moment des cycles d'enregistrement et transférées aux moyens d'émission-réception radio à un rythme adapté au débit de transfert possible du canal radio employé.

L'emploi combiné d'une mémoire de masse à grande capacité et grand débit permet de faciliter et d'accélérer, en fin de séance, la collecte des données mémorisées par les différents appareils d'acquisition et la restauration de leur capacité de mémorisation pour une séance d'enregistrement ultérieure.

L'opération est encore accélérée si l'on utilise un système de transmission à grand débit tel qu'un émetteur-récepteur de rayons lumineux modulés, ou d'ondes de radio à large bande, éventuellement un câble de transmission ou bien encore une liaison magnétique au travers du boîtier de l'appareil d'acquisition. On doit souligner que la faible portée requise pour le transfert par radio du fait que la mémoire de masse est amenée à proximité de chaque boîtier d'acquisition, rend possible l'emploi de moyens de transmission radio à large bande et à très faible puissance qui ne nécessitent pas d'autorisation administrative particulière.

D'autres caractéristiques et avantages apparaîtront à la lecture de la description ci-après d'un mode de réalisation donné à titre d'exemple non limitatif, en se référant aux dessins annexés où:

la figure 1 représente le schéma synoptique d'un mode de réalisation d'un boîtier d'acquisition sismique pour la mise en oeuvre du procédé selon l'invention et d'un système de mémoire pour recueillir les données; et

la figure 2 représente un système de mémoire de masse déplaçable pour recueillir sur le terrain les données accumulées par chacun des boîtiers d'acquisition.

Le dispositif selon l'invention est adapté au transfert à un laboratoire central d'enregistrement, de signaux sismiques captés par des récepteurs sismiques disposés le long d'un profil sismique à explorer et collectés par des appareils d'acquisition de données sismiques adaptés à amplifier, numériser et mémoriser les signaux. Un même appareil d'acquisition peut collecter les signaux provenant soit d'un récepteur unique, soit de plusieurs récepteurs. Dans ce cas, les différents signaux sont collectés par multiplexage et échantillonnage comme il est bien connu. Ces appareils d'acquisition sont contenus dans des boîtiers étanches et éventuellement associés à des bouées lorsqu'ils sont déposés sur des terrains inondés.

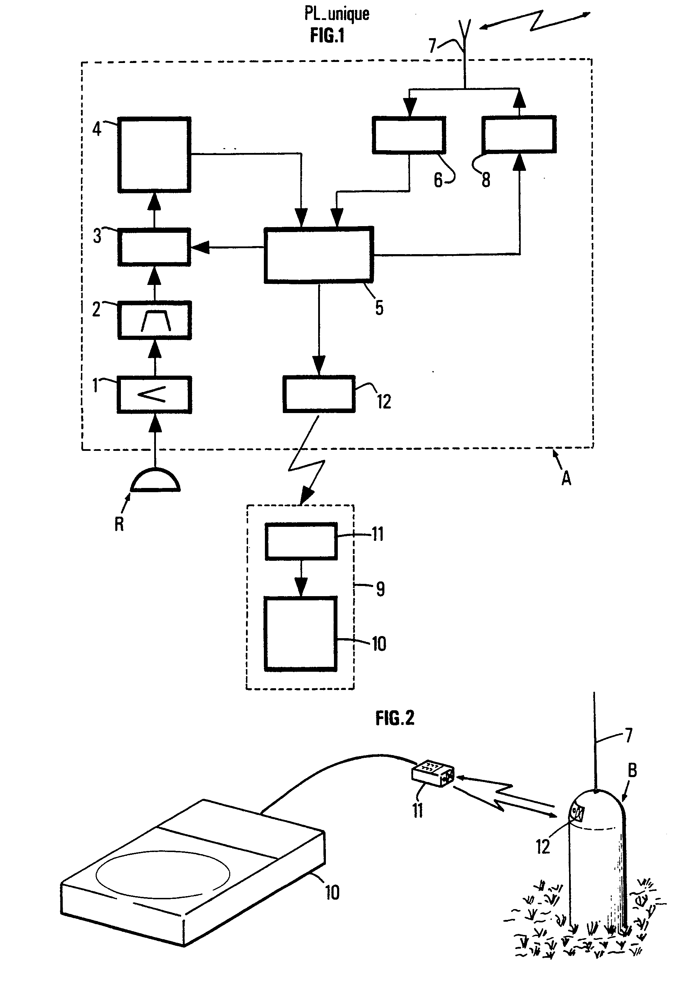

L'appareil d'acquisition A représenté à la figure 1 à titre d'exemple comporte une seule voie d'entrée à laquelle est connecté un récepteur sismique R. Le récepteur est connecté à l'entrée d'une chaîne d'acquisition comportant, connectés en série, un amplificateur 1, des moyens de filtrage 2 pour sélectionner une bande de fréquence utile et un convertisseur analogique-numérique 3. Les signaux numérisés issus du convertisseur, sont introduits dans une mémoire 4.

On peut utiliser par exemple une mémoire statique d'un type connu (EEPROM) à grande capacité. Cette mémoire est réalisée par association de circuits intégrés en nombre tel que tous les signaux reçus au cours d'une même séance d'exploration sismique, puissent être mémorisés. La capacité des éléments de mémoire à circuits intégrés ne cesse d'augmenter. Actuellement de plusieurs centaines de kilobits, elle devrait atteindre bientôt plusieurs mégabits voire même dix à vingt mégabits. Comme on l'a déjà indiqué, ce type de mémoire est à la fois, fiable, rapide, économe en énergie et occupe un faible volume.

Un calculateur programmable 5 est connecté à la mémoire vive 4 et au convertisseur analogique-numérique 3. Il est adapté à gérer la conversion des signaux en mots numériques, leur transfert dans la mémoire 4 et leur relecture ultérieure. Le calculateur 5 est connecté à un récepteur d'ondes de radio 6 adapté à démoduler des signaux de commande ou d'interrogation provenant du laboratoire central et captés par une antenne 7. A cette même antenne est connecté un émetteur d'ondes de radio 8 oui reçoit du calculateur 5 les réponses à transmettre au laboratoire central en réponse aux signaux de commande ou d'interrogation reçus.

Les signaux échangés entre chaque appareil d'acquisition et le laboratoire central peuvent être plus ou moins importants selon les cas.

Dans le cas où le laboratoire central n'exerce aucun contrôle sur le fonctionnement des appareils d'acquisition durant une séance d'acquisition de données, les signaux échangés sont constitués essentiellement par les signaux d'initialisation au moment du déclenchement de la source sismique (TB) et par divers signaux d'acquisition réémis à la réception de ces signaux.

Dans le cas où l'on veut exercer un contrôle du bon fonctionnement de chaque appareil d'acquisition durant chaque séance d'acquisition, on peut utiliser l'intervalle de temps entre deux "tirs" successifs ou des interruptions momentanées plus longues, pour commander un transfert, vers le laboratoire central, de données de contrôle ou éventuellement, en tout ou en partie, les données sismiques recueillies au cours d'un "tir" quelconque. Ce transfert est effectué au moyen de un ou plusieurs canaux hertziens standards dont l'usage est plus facile à obtenir que celui de canaux à très large bande souvent nécessaires en prospection sismique.

En restreignant l'information réémise par chaque appareil d'acquisition en réponse aux signaux d'interrogation émanant du laboratoire central, à un nombre limité de paramètres, on peut s'organiser pour les interroger tous durant l'intervalle de temps entre deux séquences d'émission-réception successives. Ces paramètres peuvent être une ou plusieurs valeurs du rapport du signal au bruit ou de l'énergie moyenne des signaux sismiques mémorisés, des mots numériques codant la pualité de fonctionnement de l'électronioue de l'appareil d'acquisition, de l'équipement radio ou encore la température ou l'humidité à l'intérieur du boîtier etc.

On considère à titre d'exemple, un système de réception comportant 600 appareils d'acquisition interrogés successivement. Si chacun d'eux réémet 120 octets traduisant les valeurs de différents paramètres de fonctionnement, on peut très facilement transmettre leurs réponses durant l'intervalle de temps de quelques secondes séparant deux "tirs" consécutifs, en utilisant 4 ou 5 canaux hertziens standards.

Dans certains cas où l'on souhaite connaître plus précisément la qualité de l'acquisition des données, on peut interrompre momentanément la succession des cycles d'émission-réception ou profiter d'une interruption quelconque intervenant au cours d'une séance d'exploration et transférer les données recueillies au cours d'un "tir" par tous les appareils d'acquisition, au laboratoire central. Celui-ci interroge successivement les différents appareils d'acquisition.

Le calculateur 5 à l'intérieur de chaque appareil, à la réception d'un ordre de transfert, commande le transfert à l'èmetteur radio 8 des données lues dans la mémoire statique 4 et relatives au cycle d'émission-réception particulier.

A titre d'exemple, le transfert des données relatives à un même tir, sur un canal hertzien standard d'une capacité de transmission de 6000 bits/seconde, prend moins de 15 secondes. Si l'on dispose par exemple de 4 canaux hertziens différents, un peu plus de 10 minutes suffisent à transférer au laboratoire les données recueillies par 200 appareils d'acquisition au cours d'un même cycle d'émission-réception.

Après chaque séance d'enregistrement, la mémoire statique 4 de chaque appareil d'acquisition contient plusieurs dizaines de Mbits.

A titre d'exemple, si le volume de données correspondant à un même tir est de l'ordre de 80 000 bits, après une séance ayant comporté 400 cycles d'émission-réception successifs, le volume de données sera de l'ordre de 64 Mbits.

A la fin de chaque séance d'exploration sismique, on procède alors à la collecte des données mémorisées. On déplace (fig. 2) un système d'enregistrement à grande vitesse 9 jusqu'au voisinage successivement de tous les appareils (au moyen d'un véhicule quelconque adapté au site, un bateau par exemple si les boîtiers d'acquisition sont installés sur des terrains immergés).

Le système d'enregistrement 9 comporte par exemple un enregistreur à disque optique numérique 10 associé à un ensemble de transfert 11 comportant un émetteur-récepteur de rayons lumineux modulés piloté par un organe de commande. On utilise par exemple un ensemble de transfert analogue à celui décrit dans la demande de brevet français EN 86/11 876 (EP-A-260165). L'appareil acquisition comporte alors également un émetteur-récepteur de rayons lumineux 12 piloté par le calculateur 5.

Les moyens optiques de transmission peuvent être remplacés dans l'ensemble de transfert 11, 12, par un émetteur-récepteur radio à large bande dont la puissance d'émission est suffisamment faible pour qu'il puisse être employé sans autorisation particulière. Un émetteur-récepteur à 1 GHz dont la puissance est limitée à 100 mW, convient par exemple pour cette application. Une transmission magnétique entre des émetteurs-récepteurs disposés dans l'ensemble de transfert et l'appareil d'acquisition peut encore être réalisée au travers de la paroi du boîtier de celui-ci.

Les modes de réalisation précédents conviennent particulièrement pour le cas où les boîtiers d'acquisition sont employés en zone humide.

Mais on peut effectuer cependant les transmissions en réalisant une liaison physique au moyen d'un câble de transmission à large bande que l'on vient connecter sur une prise appropriée du boîtier d'acquisition B.

Avec de telles voies de transmission à large bande dont le débit est de plusieurs Mbits/sec, on peut transférer en quelques secondes le contenu entier de chaque mémoire statique 4 dans le système d'enregistrement 9. Si l'on utilise par exemple un système à disque optique numérique capable d'acquérir des données avec une vitesse de 4 Mbits/sec, il suffit de 8 secondes pour transférer les 64 Mbits que peut contenir, on l'a vu, une mémoire statique d'appareil d'acquisition, à la fin d'une séance d'enregistrement.

Le système d'enregistrement portatif (9) ayant collecté successivement les données accumulées par l'ensemble des appareils d'acquisition, est ramené au laboratoire central et son contenu transféré dans une mémoire de masse et traité pour obtenir des enregistrements sismiques.

**Revendications**

1. Procédé pour transférer à un dispositif central d'enregistrement des données correspondant à des signaux reçus par un ensemble de capteurs sismiques (R) répartis le long d'un profil sismique à prospecter, en réponse à des ébranlements transmis et renvoyés par les discontinuités du sous-sol, au cours de cycles successifs d'émission-réception, ces signaux étant collectas par une pluralité d'appareils d'acquisition (A) adaptés à échantillonner, numériser et mémoriser les signaux reçus, caractérisé en ce qu'il comporte la mémorisation dans chaque appareil d'acquisition, sur un moyen de mémorisation statique à accès rapide et à capacité étendue (4), des données collectées au cours d'une séance d'exploration sismique constituée d'un nombre déterminé de cycles d'émission-réception, le déplacement jusqu'au voisinage de chacun des appareils d'acquisition d'un dispositif de mémorisation de masse (9) dont le débit d'acquisition est de plusieurs Mbits/s, le transfert sur celui-ci successivement des données mémorisées par chacun des appareils d'acquisition par une voie de transmission unique dont le débit est de plusieurs Mbits/s et le report de toutes les données stockées dans le dispositif de mémorisation de masse au dispositif central d'enregistrement.

2. Procédé selon la revendication 1, caractérisé en ce que l'on effectue le transfert des données depuis chaque appareil d'acquisition jusqu'au dispositif de mémorisation de masse par un câble de transmission à grand débit.

3. Procédé selon la revendication 1, caractérise en ce que l'on effectue le transfert des données de chacun des appareils d'acquisition au dispositif de mémorisation de masse par une liaison hertzienne à courte portée et large bande passante.

4. Procédé selon la revendication 1, caractérisé en ce que l'on effectue le transfert des données de chacun des appareils d'acquisition au dispositif de mémorisation de masse par un faisceau lumineux modulé.

5. Procédé selon la revendication 1, caractérisé en ce qu'il comporte à des fins de contrôle, le transfert au dispositif central d'enregistrement d'une partie des données collectées par chacun des appareils d'acquisition successivement, par une voie hertzienne à bande passante relativement étroite.

6. Procédé selon la revendication 5, caractérisé en ce qu'il comporte le transfert de toutes les données collectées relatives à un même cycle d'émission-réception durant des interruptions d'une séance d'enregistrement sismique.

7. Procédé selon la revendication 1, caractérisé en ce qu'il comporte le transfert de données limitées représentant le résultat de tests de bon fonctionnement de chaque appareil d'acquisition et de la qualité de l'acquisition sismique, ledit transfert étant effectué dans l'intervalle normal entre les cycles successifs démission-réception.

8. Dispositif pour transférer à un dispositif central de commande d'enregistrement des données correspondant à des signaux reçus par un ensemble de capteurs sismiques (R) répartis le long d'un profil sismique à prospecter, en réponse à des ébranlements transmis et renvoyés par les discontinuités du sous-sol, au cours de cycles successifs d'émission-réception, comportant une pluralité d'appareils d'acquisition (A) répartis sur le terrain adaptés à échantilloner, numériser et mémoriser des signaux reçus, chaque appareil d'acquisition étant pourvu d'un émetteur-récepteur d'ondes radio (18), d'un moyen de mémorisation des données correspondant aux signaux reçus et d'un ensemble de commande et de synchronisation (5) pour la gestion des communications avec le dispositif central de commande et d'enregistrement, caractérisé en ce qu'il comporte un dispositif de mémorisation de masse (9) à vitesse d'acquisition de plusieurs Mbits/s, ce dispositif de mémorisation étant déplaçable au voisinage de chacun des appareils d'acquisition disposés sur le terrain, des moyens de transmission à courte portée (11, 12) dont le débit de transmission est de plusieurs Mbits/s associés au dispositif de mémorisation de masse et aux appareils d'acquisition et en ce que le moyen de mémorisation des données dans chacun des appareils d'acquisition comporte une mémoire à circuits intégrés (4) contrôlée par l'ensemble de commande et de synchronisation (5).

9. Dispositif selon la revendication 8, caractérisé en ce que le dispositif de mémorisation de masse comporte un enregistreur à disque optique numérique (10).

10. Dispositif selon la revendication 8, caractérisé en ce que les moyens de transmission à courte portée comportent des émetteurs-récepteurs radio à large bande de fréquence associés à chaque appareil d'acquisition et au dispositif de mémorisation de masse.

11. Dispositif selon la revendication 8, caractérisé en ce que les moyens de transmission à courte portée comportent des émetteurs-récepteurs de rayons lumineux, des moyens pour moduler les rayons lumineux en fonction des données à transmettre et des moyens pour détecter les modulations affectant les rayons lumineux transmis.

**Patentansprüche**

1. Verfahren, um auf ein zentrales Aufzeichnungsgerät Daten entsprechend Signalen zu übertragen, die von einer Gruppe seismischer Empfänger (R) empfangen wurden, welche längs eines seismischen zu untersuchenden Profils verteilt sind, abhängig von übertragenen und durch Diskontinuitäten des Untergrunds zurückgeschickten Störungen während aufeinanderfolgender Emissions-Empfangszyklen, wobei diese Signale durch eine Vielzahl von Datenerfassungsgeräten (A) gesammelt werden, die so ausgelegt sind, daß sie die empfangenen Signale abtasten, digitalisieren und speichern, dadurch gekennzeichnet, daß es umfaßt: Speichern - in jedem Erfassungsgerät - auf einem statischen Speichermittel mit schnellem Zugriff und weiter Kapazität (4) der während eines seismischen Explorationszyklus gesammelten Daten, der aus einer bestimmten Anzahl von Emissions-Empfangszyklen besteht, Bewegen eines Massenspeichergeräts (9) bis in die Nähe jeder der Erfassungsgeräte, wobei dessen Erfassungsdurchsatz bei mehreren Mbits/S liegt, Übertragung hierauf nacheinander der für jedes der Erfassungsgeräte gespeicherten Daten über einen einzigen Übertragungsweg, dessen Durchsatz mehrere Mbits/S beträgt und Übertragen sämtlicher im Massenspeichergerät gespeicherter Daten an das zentrale Aufzeichnungsgerät.

2. Verfahren nach Anspruch 1, dadurch gekennzeichnet, daß man die Übertragung der Daten von jedem Erfassungsgerät auf das Massenspeichergerät über ein Übertragungskabel großer Leistung vornimmt.

3. Verfahren nach Anspruch 1, dadurch gekennzeichnet, daß man die Übertragung der Daten von jedem der Erfassungsgeräte auf das Massenspeichergerät über einen Funkweg mit kurzer Reichweite und großem Bandpaß vornimmt.

4. Verfahren nach Anspruch 1, dadurch gekennzeichnet, daß man die Übertragung der Daten von jedem der Erfassungsgeräte auf das Massenspeichergerät über ein moduliertes Lichtbündel vornimmt.

5. Verfahren nach Anspruch 1. dadurch gekennzeichnet, daß es zu Regelzwecken die Übertragung - auf das zentrale Aufzeichnungsgerät - eines Teiles der Daten, die für jedes der Erfassungsgeräte nacheinander gesammelt wurden, über einen Funkweg mit relativ engem Bandpaß umfaßt.

6. Verfahren nach Anspruch 5, dadurch gekennzeichnet, daß es die Übertragung sämtlicher gesammelter Daten umfaßt, die sich auf ein und den gleichen Emissions-Empfangszyklus während Unterbrechungen eines seismischen Aufzeichnungszyklus beziehen.

7. Verfahren nach Anspruch 1, dadurch gekennzeichnet, daß es die Übertragung begrenzter Daten umfaßt, die das Ergebnis von Tests für das gute Funktionieren jedes Erfassungsgerätes und für die Qualität der seismischen Erfassung darstellen, wobei diese Übertragung im normalen Intervall zwischen den aufeinanderfolgenden Emissions-Empfangszyklen vorgenommen, wird.

8. Vorrichtung, um auf eine zentrale Aufzeichnungs-Steueranordnung Daten entsprechend Signalen zu übertragen, die von einer Gruppe seismischer Empfänger (R) empfangen wurden, die längs eines zu untersuchenden seismischen Profils angeordnet sind, und zwar in Abhängigkeit von übertragenen und von Diskontinuitäten des Untergrunds zurückgesandten Störungen, während aufeinanderfolgender Sende-Empfangszyklen, mit einer Vielzahl von Erfassungsgeräten (A), die auf dem Erdboden verteilt und so ausgelegt sind, daß sie die empfangenen Signale abtasten, digitalisieren und speichern, wobei jedes Erfassungsgerät mit einem Sende-Empfänger für Funkwellen (18), mit einem Speichermittel für die Daten entsprechend den empfangenen Signalen und einer Steuerund Synchronisationsgruppe (5) für die Durchführung der Kommunikationen mit der zentralen Steuer-und Aufzeichnungsanordnung versehen ist, dadurch gekennzeichnet, daß sie ein Massenspeichergerät (9) mit einer Erfassungsgeschwindigkeit von mehreren Mbits/S umfaßt, wobei das Speichergerät in die Nachbarschaft jedes der auf dem Erdboden angeordneten Erfassungsgeräte bewegbar ist, Mittel zur Übertragung kurzer Reichweite (11, 12), deren Übertragungsleistung mehrere Mbits/S ausmacht, welche dem Massenspeichergerät und den Erfassungsgeräten zugeordnet sind, und daß das Speichermittel der Daten in jedem der Erfassungsgeräte einen Speicher mit integrierten Schaltungen (4) umfaßt, der von der Steuer- und Synchronisationsgruppe (5) geregelt ist.

9. Vorrichtung nach Anspruch 8, dadurch gekennzeichnet, daß das Massenspeichergerät einen Aufzeichner mit digitaler optischer Scheibe (10) umfaßt.

10. Vorrichtung nach Anspruch 8, dadurch gekennzeichnet, daß die Übertragungsmittel kurzer Reichweite Funksendeund Empfänger mit großem Freguenzband umfassen, die jedem Erfassungsgerät und dem Massenspeichergerät zugeordnet sind.

11. Vorrichtung nach Anspruch 8, dadurch gekennzeichnet, daß die Übertragungseinrichtungen kurzer Reichweite Sende-Empfänger für Lichtstrahlen, Mittel zum Modulieren der Lichtstrahlen als Funktion der zu übertragenen Daten und Mittel zum Detektieren der die übertragenen Lichtstrahlen beeinflussenden Modulationen aufweisen.

## Claims

1. Procedure for transferring, to a central recording unit, data corresponding to signals received by a number of seismic sensors (R) distributed along the seismic profile to be surveyed, in response to shocks transmitted and reflected by the discontinuities in the sub soil, during successive transmission-reception cycles, these signals being collected by a number of data acquisition devices (A) designed to sample, digitalise and memorise the signals received, characterised in that it memorises, in each data acquisition device and on a rapid access extended capacity satic memory device (4), the data collected during a seismic survey session comprising a determined number of transmission-reception cycles, positioning a mass memory device (9) in the vicinity of each of the data acquisition devices, the rate of data acquisition being several M bits/second, the transfer onto the mass memory device, in succession, of the data memorised by each of the data acquisition devices, using a single transmission channel, its rate of transmission being several M bits/second and the transfer of all the data stored in the mass memory device to the central recording unit.

2. Procedure in accordance with claim 1, characterised in that the data is transferred from each data acquisition device to the mass memory device by means of a high capacity transmission cable.

3. Procedure in accordance with claim 1, characterised in that the data from each of the data acquisition devices is transferred to the mass memory device by a wide pass band short range radio link.

4. Procedure in accordance with claim 1, characterised in that the data from each of the data acquisition devices is transferred to the mass memory unit by means of a modulated light beam.

5. Procedure in accordance with claim 1, characterised in that it comprises, for control purposes, the transfer of part of the data collected by each of the data acquisition devices, in succession, to a central recording unit, by means of a relatively narrow pass band radio channel.

6. Procedure in accordance with claim 5, characterised in that it comprises the transfer of all the data collected relative to the same transmission-reception cycle, during interruptions in a seismic recording session.

7. Procedure in accordance with claim 1, characterised in that it comprises the transfer of limited data, representing the results of tests to determine that each data acquisition device is functioning correctly and to determine the quality of the seismic data acquisition cycle, the said transfer being carried out during the normal interval between the successive transmission-reception cycles.

8. Device for transferring, to a central control and recording unit, data corresponding to the signals received by a number of seismic sensors (R) distributed along a seismic profile to be surveyed, in response to shocks transmitted and then reflected by the discontinuities in the sub soil, during successive transmission-reception cycles, this comprising a number of data acquisition devices (A) distributed over the site and designed to sample, digitalise and memorise the signals received, each data acquisiion device being provided with a radio wave transmitter-receiver (18), a means of memorising the data corresponding to the signals received and a command and synchronisation unit (5) for controlling communications with the central control and recording unit, characterised in that it comprises a mass memory device (9) operating at a data acquisition speed of several M bits/second, this memory device being capable of being positioned in the vicinity of each of the data acquisition devices located on the site, together with a means of short range transmission (11, 12), its rate of transmission being several M bits/second and associated with the mass memory device and the data acquisition devices and in that the data memory device in each of the data acquisition devices includes an integrated circuit memory (4) controlled by the command and synchronisation unit (5).

9. Device in accordance with claim 8, characterised in that the mass memory device comprises a digital optical disk recorder (10).

10. Device in accordance with claim 8, characterised in that the short range transmission unit comprises radio transmitters-receivers with a wide frequency band associated with each data acquisition device and the mass memory device.

11. Device in accordance with claim 8, characterised in that the short range transmission unit comprises transmission-receivers using light rays, together with a means of modulating the light rays in accordance with the data to be transmitted and a means of detecting the modulations affecting the light rays transmitted.

PL_unique
**FIG.1**

**FIG.2**